Europäisches Patentamt

European Patent Office

Office européen des brevets

(11) Veröffentlichungsnummer: **0 303 101 B1**

# EUROPÄISCHE PATENTSCHRIFT

(45) Veröffentlichungstag der Patentschrift: **30.09.92**

(51) Int. Cl.5: **H04B 3/23**

(21) Anmeldenummer: **88112050.5**

(22) Anmeldetag: **26.07.88**

(54) **Echokompensator.**

(30) Priorität: **29.07.87 DE 3725190**

(43) Veröffentlichungstag der Anmeldung:
**15.02.89 Patentblatt 89/07**

(45) Bekanntmachung des Hinweises auf die
Patenterteilung:
**30.09.92 Patentblatt 92/40**

(84) Benannte Vertragsstaaten:
**AT BE CH DE ES FR GB GR IT LI NL SE**

(56) Entgegenhaltungen:
**EP-A- 0 164 159**

**PATENT ABSTRACTS OF JAPAN, Band 4, Nr.
130 (E-25)[612], 12. September 1980, Seite 56
E 25 & JP-A-55 82 551**

**NATIONAL TELECOMMUNICATIONS CONFE-
RENCE, 20. November - 4. Dezember 1980,
Houston, Texas, Band 4, Seiten 76.2.1 -
76.2.5, IEEE, New York, US; D.D. FALCONER:
"Adaptive-reference echo cancellation for
full-duplex two-wire digital transmission"**

**IEEE INTERNATIONAL CONFERENCE ON
COMMUNICATIONS, 23.-26. Juni 1985, Chicago, Illinois, Band 3, Seiten 1492-1497, IEEE,**

**New York, US; S. MINAMI et al.: "A double
talk detection method for an echo canceller"**

(73) Patentinhaber: **SIEMENS AKTIENGESELL-
SCHAFT
Wittelsbacherplatz 2
W-8000 München 2(DE)**

(72) Erfinder: **Von Pfeil, Dirsko
Dammstrasse 14
W-8021 Hohenschäftlarn(DE)**

## Beschreibung

Die Erfindung bezieht sich auf einen Echokompensator, bei dem ein adaptives Transversalfilter mit seinem Eingang am Daten-Empfangsweg und mit seinem Ausgang am Minus-Eingang einer Subtrahierschaltung im Daten-Sendeweg einer digitalen Fernleitung angeordnet ist und einen Takteingang für den Sendewegtakt sowie einen Schrittweiten-Steuereingang aufweist, über den die Schrittweite, mit der das Transversalfilter eingestellt wird, gesteuert werden kann, bei dem der Ausgang der Subtrahierschaltung mit dem Fehlersignaleingang des Transversalfilters verbunden ist und bei dem eine Echo-Meßeinrichtung zum Steuern der Schrittweite und zum Erkennen von Doppelsprechen vorgesehen ist, deren erster Eingang mit dem Sendewegdaten-Eingang, deren zweiter Eingang mit dem Sendewegdaten-Ausgang, deren dritter Eingang mit dem Daten-Empfangsweg und deren Ausgang mit dem Schrittweiten-Steuereingang des Transversalfilters verbunden sind und die einen Takteingang für den Sendewegtakt aufweist, wobei bei Erkennung eines Doppelsprechens die Schrittweite auf einen Minimalwert gesetzt wird.

Ein derartiger Echokompensator ist aus der Zeitschrift "telcom report", 9 (1986) Heft 6, Seiten 352 - 357, insbesondere Bild 7 bekannt. Ein Echokompensator mit einem Rahmenanpassungsspeicher ist weiter aus der Zeitschrift "Communication & Transmission", Nr. 4, 1985, Seiten 53 - 66, insbesondere Fig. 6 bekannt. Die Siemens AG liefert Rahmenanpassungsspeicher unter der Bezeichnung PEB 2030.

Echokompensatoren werden in internationalen Kopfämtern an den Schnittstellen zwischen einer internationalen Fernleitung großer Länge wie einer Seekabel-oder Satellitenverbindung und einer nationalen, in einen Vierdraht-Zweidrahtübergang in Form einer Gabel und in eine anschließende Zweidrahtleitung mündenden Leitung, dem sogenannten End-Echoweg, angeordnet. Trennen die Gabeln den Hin- und Rückweg nicht vollständig, so entstehen durch die Laufzeit des Signals bedingt Echos. Von der Sendestelle gelangt ein Sprachsignal nach der Verzögerungszeit über den Hin- und Rückweg gedämpft zurück zum Sprecher.

Ein adaptives Transversalfilter bildet den End-Echoweg nach, indem es, während es vom Empfangswegsignal durchlaufen wird, ein künstliches Echo erzeugt. Dieses wird dann vom Sendeweg-Ausgangssignal abgezogen. Eine Regelschaltung verstellt die Koeffizienten des Transversalfilters so lange, bis das Sendeweg-Ausgangssignal weitgehend frei vom Echo ist.

Die Schrittweite, mit der die Koeffizienten des Transversalfilters eingestellt werden, ist im allgemeinen von der Größe des Fehlersignals am Sendewegausgang abhängig. Dies bewirkt, daß der Echokompensator bei großem Fehlersignal mit großer Schrittweise rasch das am meisten störende Echo kompensiert und anschließend bei kleinerem Fehlersignal mit kleiner Schrittweite den Echorest gut auslöscht.

Eine derart einfache Schrittweitensteuerung hat jedoch den Nachteil, daß bei nicht sicher erkennbarem Gegensprechen ein großes Fehlersignal vorgetäuscht wird. Dadurch entsteht eine große Schrittweite, die die gute Einstellung des Echokompensators wieder verschlechtert.

Um diesen Effekt zu vermeiden, kann ähnlich wie bei der adaptiven Echosperre, in der Zeit, in der der ferne Teilnehmer spricht, mit relativ großer Zeitkonstante die Echodämpfung gemessen und dann dadurch relativ sicher ein Doppelsprechen erkannt werden.

Das Doppelsprechen ist sicher erkennbar, wenn der Sendepegel größer oder gleich dem Empfangspegel ist. In diesem Fall wird die Echo-Meßeinrichtung stillgelegt. Das Doppelsprechen ist nicht sicher erkennbar, wenn der Sendepegel kleiner als der Empfangspegel, aber größer als der Empfangspegel minus dem Ergebnis der Echo-Meßeinrichtung ist. In diesem Fall verkleinert sich das Ergebnis der Echo-Meßeinrichtung allmählich.

Bei Doppelsprechen kann die Schrittweite auf den kleinstmöglichen Wert oder ganz auf Null gesetzt werden. Nur bei relativ lange andauerndem nicht sicher erkennbarem Doppelsprechen würde sich das Ergebnis der Echomessung so weit vermindern, daß schließlich eine große unerwünschte Schrittweite auftritt. Diese an sich sehr zweckmäßige Schaltung hat bei einem Phasensprung - einem Einfügen oder Weglassen eines PCM-Rahmens in den Weg des künstlichen Echos - das durch unterschiedliche Bitraten in Sende- und Empfangsweg verursacht wird, den Nachteil, daß wegen der nun nicht mehr angepaßten Laufzeit im adaptiven Filter erneut ein Echo entsteht. Besonders wenn der Schlupf auftritt, nachdem der Echokompensator sehr gut eingelaufen war, kann der Kompensator das adaptive Filter erst stark verzögert nachregeln, weil das sich plötzlich vergrößernde Restechosignal fälschlicherweise als Doppelsprechsignal erkannt wird. Die Schrittweite zum Einstellen des adaptiven Filters bleibt daher sehr klein oder Null, bis sich das Ergebnis der Echomessung auf den tatsächlichen geringen Wert eingestellt hat. Erst dann erfolgt eine Neueinstellung des adaptiven Filters mit großer Schrittweite.

Aufgabe der Erfindung ist es, einen Echokompensator zu realisieren, der diesen Effekt vermeidet.

Ausgehend von einem Echokompensator der einleitend geschilderten Art wird diese Aufgabe erfindungsgemäß dadurch gelöst, daß zwischen dem Eingang des Transversalfilters und dem Daten-Empfangsweg ein an sich bekannter Rahmenanpassungsspeicher eingefügt ist, der in der Lage ist, einen Phasenschlupf zu erkennen, und der einen ersten Takteingang für den Empfangswegtakt, einen zweiten Takteingang für den Sendewegtakt und einen Ausgang für ein Rücksetzsignal bei Schlupferkennung aufweist, und daß eine Verbindung zwischen dem Ausgang des Rahmenanpassungsspeichers für das Rücksetzsignal und einem Rücksetzeingang der Echo-Meßeinrichtung vorgesehen ist, wobei bei Schlupferkennung die Schrittweite auf einen Maximalwert zurückgesetzt wird.

Beim Erkennen eines Phasensprungs wird die Echo-Meßeinrichtung zurückgesetzt. Dies ermöglicht eine sofortige Neueinstellung des adaptiven Transversalfilters.

Anhand eines Ausführungsbeispiels wird die Erfindung nachstehend näher erläutert:

Fig. 1     zeigt einen einen Echokompensator enthaltenden Teil einer digitalen Nachrichtenübertragungsanlage nach dem Stand der Technik und

Fig. 2     zeigt einen erfindungsgemäßen Echokompensator.

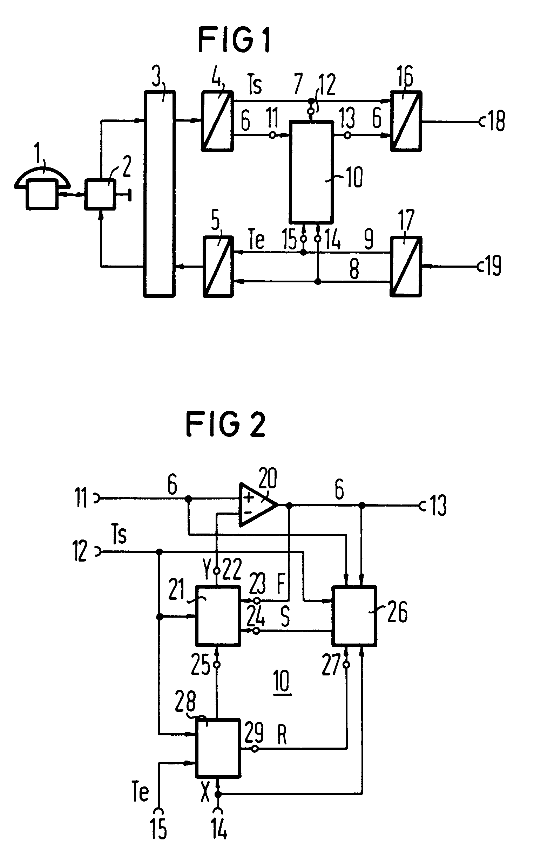

Fig. 1 zeigt ein Ende einer digitalen Nachrichtenübertragungs-anlage. Diese Teilanlage enthält einen Teilnehmerapparat 1, eine Gabel 2, ein PCM-System 3, HDB3-Binär-Umsetzer 4 und 17, Binär-HDB3-Umsetzer 5 und 16 sowie einen Echokompensator 10.

Gesendete Signale gelangen vom Teilnehmerapparat 1 zum Fernleitungsausgang 18 und empfangene Signale vom Fernleitungseingang 19 zum Teilnehmerapparat 1. Die HDB3-Binär-Umsetzer 4 und 17 trennen die Daten und den Takt und geben die Daten auf den Daten-Sendeweg 6 bzw. den Daten-Empfangsweg 8 und den Takt auf den Takt-Sendeweg 7 bzw. auf den Takt-Empfangsweg 9.

Fig. 2 zeigt den erfindungsgemäßen Echokompensator 10 mit einem Subtrahierer 20, einer Echo-Meßeinrichtung 26 und einem Rahmenanpassungsspeicher 28.

Es wird ein Neuwert X an den Eingang 25 und ein Fehlersignal F vom Ausgang des Subtrahierers 20 an den Fehlersignaleingang 23 des Transversalfilters 21 angelegt. Dabei stellen sich seine Koeffizienten selbsttätig derart ein, daß das an seinem Ausgang 22 abfallende Akkumulationsergebnis Y zu den am Daten-Sendewegeingang 11 anliegenden Signal am ähnlichsten wird. In diesem Fall wird die vom Subtrahierer 20 gebildete Differenz dieser beiden Signale am kleinsten.

Die Echo-Meßeinrichtung 26 mißt mit relativ großer Zeitkonstante die Echodämpfung. Ein Doppelsprechen wird relativ sicher erkannt, wenn der Pegel am Daten-Sendeweg 6 gleich oder größer dem Pegel auf dem Daten-Empfangsweg 8 ist. In diesem Falle wird die Echo-Meßeinrichtung 26 stillgelegt. Ein Doppelsprechen ist dagegen nicht sicher erkennbar, wenn der Pegel auf dem Daten-Sendeweg 6 kleiner als der Pegel auf dem Daten-Empfangsweg 8 aber größer als dieser Pegel abzüglich dem Ergebnis der Echo-Meßeinrichtung 26 ist. In diesem Fall verkleinert sich dieses allmählich.

Bei Doppelsprechen kann die Schrittweite mit dem Schrittweiten-Einstellsignal S über den Schrittweiten-Steuereingang 24 des Transversalfilters 21 auf den kleinsten möglichen Wert oder ganz auf Null gesetzt werden. Lediglich bei relativ lange andauerndem, nicht sicher erkennbaren Doppelsprechen würde sich das Ergebnis der Echomessung so weit vermindern, daß schließlich eine große unerwünscht Schrittweite auftritt.

Der Rahmenanpassungsspeicher 28 erkennt einen Phasensprung, der durch Einfügen oder Weglassen eines PCM-Rahmens in den Weg des künstlichen Echos durch unterschiedliche Bitraten im Daten-Sendeweg 6 und Daten-Empfangsweg 8 verursacht wird. Durch den Phasensprung und die nun nicht mehr angepaßte Laufzeit im Transversalfilter 21 entsteht erneut ein Echo. Insbesondere dann, wenn der Schlupf auftritt, nachdem der Echokompensator 10 sehr gut eingelaufen war, kann dieser das Transversalfilter 21 erst stark verzögert nachregeln, weil das sich plötzlich vergrößernde Restechosignal fälschlich als Doppelsprechsignal erkannt wird. Die Schrittweite zum Einstellen des Transversalfilters 21 bleibt daher sehr klein oder Null, bis sich das Ergebnis der Echomessung auf den tatsächlichen geringeren Wert eingestellt hat. Erst dann erfolgt eine Neueinstellung des Transversalfilters 21 mit großer Schrittweite.

Die Erfindung behebt diesen Mangel, weil beim Erkennen des Phasensprunges der Rahmenanpassungsspeicher 28 die Echo-Meßeinrichtung 26 mit dem Rücksetzsignal R über den Rücksetzsignal-Eingang 27 zurücksetzt. Dadurch kann sich der Echokompensator 10 rasch neu einstellen.

**Patentansprüche**

1.     Echokompensator (10),
       bei dem ein adaptives Transversalfilter (21) mit seinem Eingang (25) am Daten-Empfangsweg (8) und mit seinem Ausgang (22) am Minus-Eingang einer Subtrahierschaltung (20) im Daten-Sendeweg (6) einer digitalen Fernleitung angeordnet ist und einen Takteingang (12) für den Sendewegtakt (Ts) sowie einen Schrittweiten-Steuereingang (24) aufweist, über den die Schrittweite, mit der das Transversalfilter eingestellt wird, gesteuert werden kann, bei dem der Ausgang der Subtrahierschaltung (20) mit dem Fehlersignaleingang (23) des Transversalfilters (21) verbunden ist und

bei dem eine Echo-Meßeinrichtung (26) zum Steuern der Schrittweite und zum Erkennen von Doppelsprechen vorgesehen ist, deren erster Eingang mit dem Sendewegdaten-Eingang (11), deren zweiter Eingang mit dem Sendewegdaten-Ausgang (13), deren dritter Eingang mit dem Daten-Empfangsweg (8), und deren Ausgang mit dem Schrittweiten-Steuereingang (24) des Transversalfilters (21) verbunden sind und die einen Takteingang für den Sendewegtakt (Ts) aufweist, wobei bei Erkennung eines Doppelsprechens die Schrittweite auf einen Minimalwert gesetzt wird, **dadurch gekennzeichnet,** daß zwischen dem Eingang (25) des Transversalfilters (21) und dem Daten-Empfangsweg (8) ein an sich bekannter Rahmenanpassungsspeicher (28) eingefügt ist, der in der Lage ist, einen Phasenschlupf zu erkennen, und der einen ersten Takteingang für den Empfangswegtakt (Te), einen zweiten Takteingang für den Sendewegtakt (Ts) und einen Ausgang (29) für ein Rücksetzsignal (R) bei Schlupferkennung aufweist, und daß eine Verbindung zwischen dem Ausgang (29) des Rahmenanpassungsspeichers (28) für das Rücksetzsignal (R) und einem Rücksetzeingang (27) der Echo-Meßeinrichtung (26) vorgesehen ist, wobei bei Schlupferkennung die Schrittweite auf einen Maximalwert zurückgesetzt wird.

## Claims

1.  Echo compensator (10),
    in which an adaptive transversal filter (21) is connected with its input (25) to the data receiving path (8) and with its output (22) to the minus input of a subtractor circuit (20) in the data transmitting path (6) of a digital trunk line and has a clock input (12) for the transmitting path clock signal (Ts) and also a step size control input (24) via which it is possible to control the step size with which the transversal filter is set, in which the output of the subtractor circuit (20) is connected to the error signal input (23) of the transversal filter (21), and in which an echo measuring device (26) is provided for controlling the step size and for detecting double-talking, the first input of which is connected to the transmitting path data input (11), the second input of which is connected to the transmitting path data output (13), the third input of which is connected to the data receiving path (8), and the output of which is connected to the step size control input (24) of the transversal filter (21), and which has a clock input for the transmitting path clock signal (Ts), the step size being set to a minimum value if double-talking is detected, characterised in that inserted between the input (25) of the transversal filter (21) and the date receiving path (8) is a free matching store (28) which is known per se and is capable of detecting a phase slip, and which has a first clock input for the receiving path clock signal (Te), a second clock input for the transmitting path clock signal (Ts) and an output (29) for a reset signal (R) if slip is detected, and in that a connection is provided between the output (29) of the frame matching store (28) for the reset signal (R) and a reset input (27) of the echo measuring device (26), the step size being reset to a maximum value if slip is detected.

## Revendications

1.  Suppresseur d'échos (10),
    dans lequel l'entrée (25) d'un filtre transversal adaptatif (21) est raccordée à la voie (8) de réception de données et dont la sortie (22) est raccordée à l'entrée négative d'un circuit soustracteur (20) dans la voie (6) d'émission de données d'une ligne interurbaine numérique, et possède une entrée de cadence (12) pour la cadence (Ts) de la voie d'émission ainsi qu'une entrée (24) de commande de la largeur de pas, par l'intermédiaire de laquelle peut être commandée la largeur de pas réglée au moyen du filtre transversal, et dans lequel la sortie du circuit soustracteur (20) est raccordée à l'entrée de signaux d'erreurs (23) du filtre transversal (21), et dans lequel un dispositif de mesure d'échos (26) est prévu pour la commande de la largeur des pas et pour l'identification de duplex, et dont la première entrée est raccordée à l'entrée (11) de données de la voie d'émission, dont la seconde entrée est raccordée à la sortie (13) des données de la voie d'émission, dont la troisième entrée est raccordée au trajet (8) de réception des données et dont la sortie est raccordée à l'entrée (24) de commande de la largeur des pas du filtre transversal (21) et qui possède une entrée de cadence pour la cadence (Ts) de la voie d'émission, la largeur des pas étant réglée à une valeur minimale lors de l'identification d'un duplex, caractérisé par le fait qu'entre l'entrée (25) du filtre transversal (21) et la voie (8) de réception des données est insérée une mémoire d'adaptation de trame (28) connue en soi, qui est à même d'identifier un glissement de phase et qui comporte une première entrée de cadence pour la cadence (Te) de la voie de réception, une seconde entrée de cadence pour la cadence (Ts) de la voie d'émission et une sortie (29) pour un signal de remise à zéro (R) lors de l'identification d'un glissement, et

qu'il est prévu une liaison entre la sortie (29) de la mémoire d'adaptation de trame (28) pour le signal de remise à zéro (R) et une entrée de remise à zéro (27) du dispositif de mesure d'échos (26), la largeur des pas étant ramenée à une valeur maximale lors de l'identification d'un glissement.

# FIG 1

# FIG 2